# EUROPEAN PATENT SPECIFICATION

(11) **EP 3 765 731 B1**
(45) Date of publication and mention of the grant of the patent: **10.09.2025**
(21) Application number: 19718180.3
(22) Date of filing: 19.04.2019
(51) Int. Cl.: F03B 3/12

(54) **REDUCED SCALE RUNNER AND METHOD OF MANUFACTURING THEREOF**
LAUFRAD IN REDUZIERTER GRÖSSE UND VERFAHREN ZUR HERSTELLUNG DAVON
ROUE À ÉCHELLE RÉDUITE ET SON PROCÉDÉ DE FABRICATION

(30) Priority: 20.04.2018 EP 18305487
(43) Date of publication of application: 20.01.2021
(73) Proprietor: GE Renewable Technologies, 38100 Grenoble (FR)
(72) Inventor: GUILLAUME, Renaud, 38100 GRENOBLE (FR); LOWYS, Pierre-Yves, 38100 GRENOBLE (FR); ANDRE, François, 38100 GRENOBLE (FR); CHABERT, Lucas, 38100 GRENOBLE (FR); GAUDION, Sylvain, 38100 GRENOBLE (FR); DESMARAIS, Sylvain, 38100 GRENOBLE (FR); DI MARIA, Bernard, 38100 GRENOBLE (FR)
(74) Representative: Brevalex
(86) International application number: PCT/EP2019/060225
(87) International publication number: WO 2019/202143

(56) References cited:
- EP-A2- 1 744 056
- GB-A- 811 414
- JP-A- 2006 029 198
- JP-A- S55 123 374
- US-A1- 2005 198 967
- US-B1- 6 524 063
- ZHE MA ET AL: "Unstable Flow Characteristics in S-Shaped Region of Pump-Turbine Runners With Large Blade Lean", VOLUME 1A, SYMPOSIA: KEYNOTES; ADVANCES IN NUMERICAL MODELING FOR TURBOMACHINERY FLOW OPTIMIZATION; FLUID MACHINERY; INDUSTRIAL AND ENVIRONMENTAL APPLICATIONS OF FLUID MECHANICS; PUMPING MACHINERY, 30 July 2017 (2017-07-30), XP055508875, ISBN: 978-0-7918-5804-2, DOI: 10.1115/FEDSM2017-69275
- C VALERO ET AL: "Modal behavior of a reduced scale pump turbine impeller. Part II: Numerical simulation", IOP CONFERENCE SERIES: EARTH AND ENVIRONMENTAL SCIENCE, vol. 12, 1 August 2010 (2010-08-01), pages 012117, XP055508882, DOI: 10.1088/1755-1315/12/1/012117

## Description

### TECHNICAL FIELD AND PRIOR ART

The invention relates to the field of hydropower industry.

The increased deployment of renewable energy technologies such as wind and solar power contributes to the energy mix. However, these sources of energy are by nature stochastic and therefore there is a new requirement to balance this intermittency to secure the grid stability and supply of electricity. Hydropower is a solution that is very well placed to meet this need: the reservoir naturally provides storage capacity, the turbines have very fast start-up times, a large base is already installed across the world and there is still a large potential for the development of new sites.

Such flexibility however dictates that the turbines are designed to withstand an increased number of transient operations, i.e. load variations and, faster, more frequent start-ups and stops. It also requires that the turbine be operated over a larger range compared to the traditional, smaller zone defined around the Best Efficiency Point (BEP) for longer period of times.

In these new operating ranges and off-design conditions a wide range of hydraulic phenomena is met (due in particular to unsteady behaviour and/or turbulences of the flows) which significantly reduce the runner lifetime. It is a technical challenge for manufacturers to make turbines that guarantee a 0-100% continuous operating range. To do so, they must be able to ascertain the hydraulic and mechanical performance of the turbine under any operating condition.

Most hydraulic turbines of hydroelectric powerplants are designed using numerical methods and computational fluid dynamic simulations. Although these methods allow to design the turbine, a model test conducted in accordance with the INTERNATIONAL STANDARDS IEC 60193 and 62097 is still often required to provide the full validation. Those model tests are conducted by fitting a custom-made small-scale model of the hydraulic turbine onto a test rig which simulates the characteristics and behaviour of the hydroelectric machine. It has been noted however that the IEC norms do not provide specifications for assessing and analysing the mechanical performance and response of the model runners.

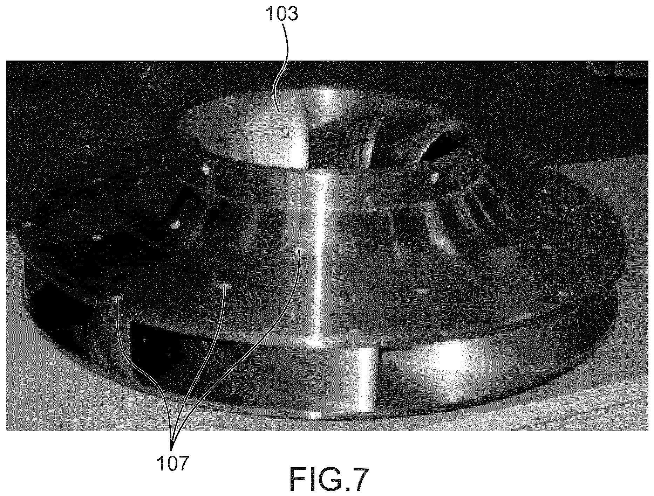

Accordingly, a known reduced scale model 100 of the runner is illustrated on figure 7 and is manufactured by assembling the different parts, in particular the blades 103 to the runner crown and band, using bolts or screws 107 and is specifically designed to study hydraulic similitude.

The assembly process of such a known reduced scale model is time consuming.

Furthermore this reduced scale model is not designed to assess the mechanical behaviour of the turbine, which is needed in view of the new operating ranges and transient conditions. Indeed its mechanical structure is not representative of the real-size turbine which does not include any of the bolts or screws used for assembling a reduced scale model according to the prior art.

In particular the presence of bolts makes the known reduced scale models not adapted for measuring mechanical data (such as strains and/or radial and/or axial displacements) which could then be used for modelling the behaviour of the corresponding full scale industrial turbine. And the assembly zones of the different parts do not form a continuous medium even when the bolts are tightened.

There is thus a need for new reduced-scale models, adapted to assess the new operating conditions of turbines and adapted for measuring mechanical data of the model.

There is also a need for a new manufacturing process of such reduced-scale models, easier to perform and less time consuming than the known manufacturing process.

This applies both to reduced-scale models adapted for measuring mechanical data of the model but also to reduced-scale models adapted to perform hydraulic tests.

There is thus also a need for new reduced-scale models adapted to perform hydraulic tests.

There is also a need for a new manufacturing process of reduced-scale models adapted to perform hydraulic tests.

The article by Zhe Ma et al., Vol 1A, SYMPOSIA : KEYNOTES ; Advances in Numerical Modeling For Turbomachinery Flow Optimization; Fluid Machinery; Industrial and Environmental Applications of Fluid Mechanics; Pumping Machinery, 30 July 2017 (2017-07-30) studies the « Unstable Flow Characteristics in S-Shaped Region of Pump-Turbine Runners With Large Blade Lean ».

The article by C Valero et al., Part II : Numerical simulation, IOP CONFERENCE SERIES: EARTH AND ENVIRONMENTAL SCIENCE, vol. 12, 1 August 2010 (2010-08-01) studies a "Modal behavior of a reduced scale pump turbine impeller".

### SUMMARY OF THE INVENTION

The invention first concerns a new reduced-scale model of a turbine runner according to claim 1.

A reduced-scale model according to the invention has no assembly zones with bolts (or screws or any other fastening means) between different portions or parts which are mentioned above.

In a reduced-scale model according to the invention the mechanical connections between the different parts, for example between the blades, the crown and the band are similar to those of the real size turbine, i.e. they are bound by very strong liaisons. There is thus a mechanical continuity between any two neighbouring parts of the model.

A model according to the invention thus allows an assessment of both mechanical and hydraulic behavior of a real-size turbine in all possible operating conditions, including transient operations, for example start and stop load variations or steady operation in all operating range.

Preferably a distance or an opening (C1) separating two neighbouring blades is between 5 mm and 14 mm (or 10 mm or 7 mm) or is less than 14 mm or 10 mm or 7 mm.

Preferably an overlap or a recovery factor (C2) of a reduced scale model according to the invention is higher than 720° or 860° or 1000°.

A reduced-scale model according to the invention can include at least one sensor or gauge, for example at least one pressure sensor and/or strain gauge and/or accelerometer and/or displacement sensor; mechanical data can thus be measured.

A reduced-scale model according to the invention comprises one or more groove and/or duct and/or channel and/or via and/or passage for positioning at least one electrical wire therein. Such wires are for example for connecting one or more sensor or gauge located on the reduced-scale model.

Hydraulic tests can be performed with a reduced-scale model according to the invention without any sensor or gauge.

A reduced-scale model according to the invention may have assembly surfaces or lines along which two different parts of the model were brazed or glued or welded together.

In a reduced-scale model according to the invention, the number of blades is for example comprised between 13 and 19 for a Francis turbine, and between 7 and 11 for a pump turbine.

A reduced-scale model according to the invention is for example made of aluminum or titanium or PVC or stainless steel or bronze.

It is also an object of this invention to provide a method for manufacturing a reduced scale model of a turbine runner that allow an assessment of both mechanical and hydraulic behavior of the real-size turbine, preferably in all possible operating conditions and by a cost-effective process.

The invention therefore also bears on a process for manufacturing a reduced-scale model turbine according to claim 9.

According to another aspect, of a process according to the invention:
- a distance or an opening (C1) separating two neighbouring blades is between 5 mm and 14 mm (or 10 mm or 7 mm) or is less than 14 mm or 10 mm or 7 mm;
- and/or an overlap or a recovery factor (C2) is higher than 720° or 860° or 1000°.

A process according to the invention can further comprise positioning at least one sensor or gauge against a surface of said model, for example at least one pressure sensor and/or strain gauge and/or accelerometer and/or displacement sensor.

A process according to the invention can also further comprise at least one of a polishing step and/or anodization step. For example a reduced scale model can be made with a thin oversize, and then polished to reach an acceptable roughness, for example with a method like MMP and/or it can eventually be locally machined.

A process according to the invention can be selected from among an investment casting process, a strong assembly process, an additive printing and monobloc machining process.

For an investment casting process, the material of the reduced-scale model can be aluminum or titanium.

For a strong assembly process, different parts of the model can be assembled by brazing or welding or with help of glue. Different parts of the scaled model runner can be first individually machined with an acceptable roughness. For example, the different parts can be the different blades, shroud, hub. The runner can also be divided horizontally, or vertically or along any other direction: one of the above strong assembly processes is available to assemble said different parts. When the model is glued or welded, at least one sensor or gauge can be positioned against a surface of a part of the model before assembly, which is favorable for manufacturing models having at least one sensor or gauge located in zones which are difficult to reach after assembly, for example because the opening between two neighboring blades is less than 17 mm or less than 13 mm or 10 mm.

For an additive printing process, the material of the reduced-scale model can be plastic or metal.

For a monobloc machining process, the material of the reduced-scale model can be aluminum or PVC or stainless steel or bronze.

### BRIEF DESCRIPTION OF THE DRAWINGS

- Figure 1 shows a reduced scale model according to the invention;
- Figure 2 shows a view of a reduced scale model according to the invention obtained by an investment casting process;
- Figure 3 shows a view of part of a reduced scale model according to the invention obtained by a brazing process;
- Figure 4 shows a view of part of a reduced scale model according to the invention during the model assembly by a gluing process;
- Figures 5A and 5B show how some geometrical parameters of a reduced scale model can be measured;
- Figures 6A and 6B show aspects of a welding process to manufacture a reduced scale model;
- Figure 7 shows a prior art reduced scale model, assembled with bolts.

### DETAILLED DESCRIPTION OF SPECIFIC EMBODIMENTS

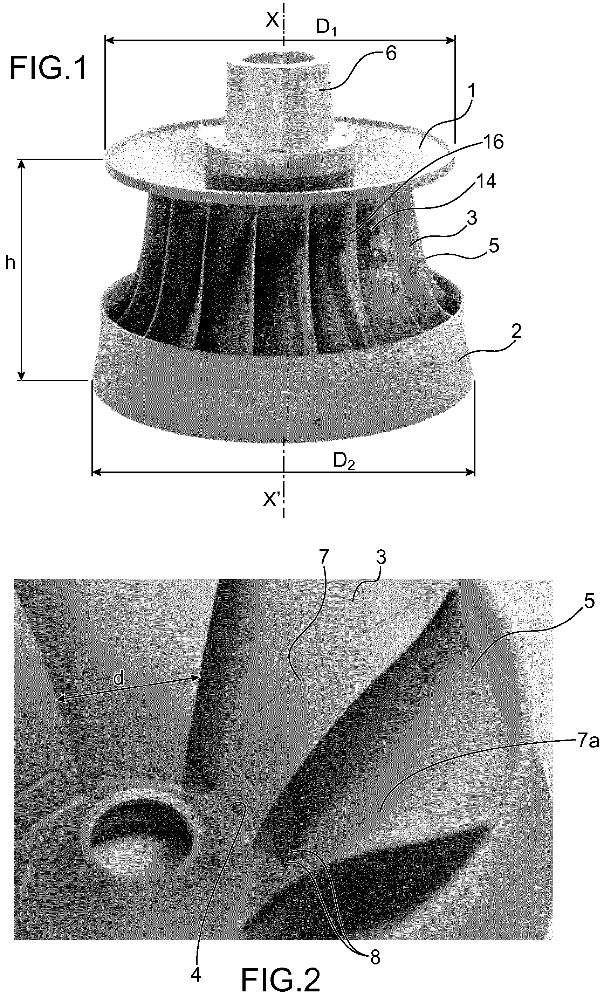

An example of a reduced scale model according to the invention is illustrated on figure 1. Figures 2-5B show views of particular aspects of a reduced scale model according to the invention, obtained by different manufacturing processes.

An example of a reduced scale model of a turbine comprises a circular crown 1 and a circular band 2 facing the crown. Each of them has a diameter between 10 cm and 40 cm; It is rotational symmetrical around an axis XX' (the rotation axis of the model).

Blades 3 extend between the crown 1 and the band 2. Each blade has a curved shape or, more generally, a warped shape (which can be seen on figure 2) between two ends 4 (see figure 2), 5 (see figures 1, 2 and 5). One end 4 of each blade is close to the center of the band and of the crown, the other end 5 is at, or close to, the periphery of the band. Reference 6 is a hub.

This reduced scale model is that of a Francis turbine. Alternatively it can be that of a pump or a pump-turbine (for simulating operations in pump mode, in which the model is used in a reversed mode of the turbine mode); in this case, the trailing edge of each blade is designed to work as a leading edge.

In view of the new operating ranges a reduced scale model according to the invention preferably includes on-board instrumentation such as pressure sensors and strain gauges to analyse the dynamic solicitation and the mechanical parameters of the structure.

One or more sensor, for example one or more pressure sensor(s) 14 and/or one or more strain gauge(s) 16 and/or more accelerometer(s) or one or more displacement sensor(s) can be positioned against the surface of the model, for example the surface of one or more blade 3. Such sensor(s) are for measuring and analyzing the mechanical response of the runner.

However, a reduced scale model according to the invention can also be used without on-board instrumentation, for performing hydraulic tests.

Grooves or passages or ducts can be formed at or in the surface of a model according to the invention in order to position one or more electrical wires therein to connect one or more pressure sensor 14 and/or strain gauge 16. For example, one or more groove(s) 7, 7a can be formed at or in the surface of one or more blade(s) 3, as illustrated on figure 2. One or more passage(s) or duct(s) 8 can also formed in the model for one or more electrical wires after the model has been manufactured by one of the methods explained below, for example after investment casting (figure 2).

A reduced scale model according to the invention has dimensions much smaller than those of an industrial turbine: the scale ratio is for example between 5 and 20 . The diameter D₁ of the circular crown 1 is for example between 200 mm and 400 mm. The diameter D₂ of the circular band 2 is for example between 200 mm and 350 mm or even 400 mm. The height h (figure 1) of the model, measured along the axis XX', is for example between 100 and 300 mm.

Furthermore, a reduced scale runner (or reduced scale model), according to the present invention, is a runner implemented only for hydraulic and/or mechanical tests. In other words, a reduced scale runner is not used for electrical power production.

According to the present invention, the reduced scale model is preferably made of a single bloc and in particular a single mechanical bloc.

By "single bloc" or "single mechanical bloc", it is meant a continuous mechanical bloc. In other words, there is no need to use bolts, screws or rivets to assemble the different parts together.

As will be discussed in more details in the next sections, a single bloc according to the present invention can be obtained via at least one of the manufacturing processes chosen among: casting process, machining process, additive process, welding process, brazing process, gluing process.

In particular, a single bloc obtained by casting, by machining or by additive process is homogeneous and continuous, and in the particular case of casting and machining can be even isotropic.

Prior art models, contrary to the reduced scale model of the present invention, can be disassembled because the means used for fastening the different parts together are reversible. Because a model according to the present invention offers a mechanical continuity between any two points, different parts of said model cannot be easily disassembled without breaking them. The absence of reversible fastening means can be easily seen when observing a model according to the invention, as can be seen for example on figures 1- 4.

Without any fastening means like bolts, or screws, or pins, or rivets, a model according to the invention is designed to correctly assess the mechanical behavior of a turbine, in particular by measuring reliable mechanical parameters like strains, and/or thrusts etc with help of one or more gauge or sensor. Even if it has neither a gauge nor a sensor, and is thus not adapted to evaluate mechanical parameters, it is nevertheless adapted to assess the hydraulic behavior of the turbine.

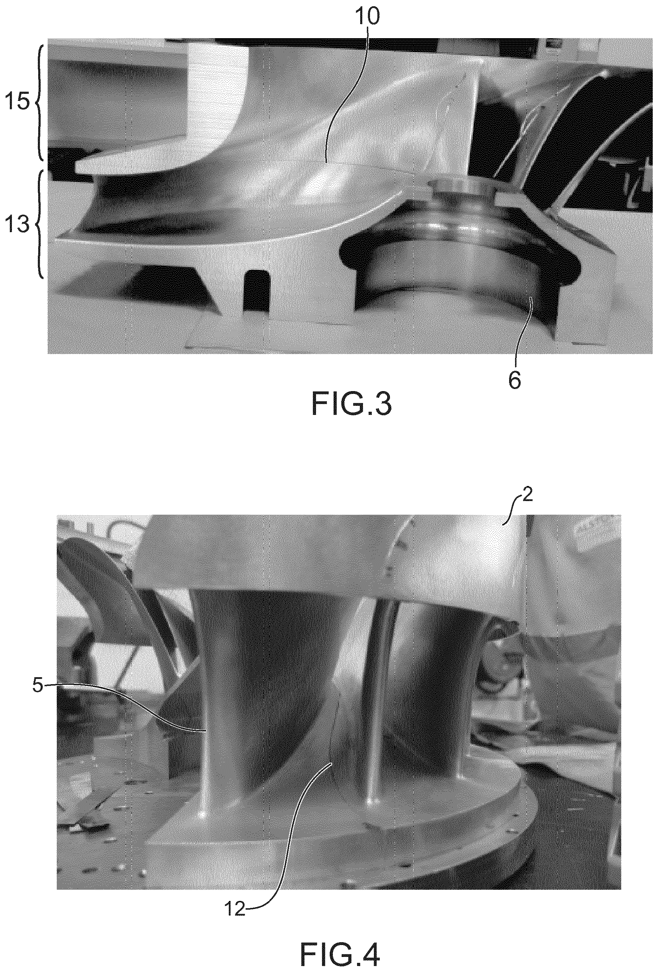

In particular the surface of the model offers a mechanical continuity between any two neighboring parts, especially when such neighboring parts are assembled together, preferably by one of the processes discussed below. Figure 3 (respectively 4) shows a line 10 (respectively 12) along which two different parts of a model were brazed (respectively glued) (actually the two parts were brazed - respectively glued - along two corresponding planes or surfaces but only line 10 - respectively 12 - can be seen from outside). These lines 10, 12 do not affect the structural and mechanical continuity between the different parts thus assembled. In particular the lines 10, 12 do not affect the results of measurements of mechanical properties in contrast to models known in the prior-art.

The tests and measurements made with such a reduced scale model are thus free of the errors affecting them when implementing reduced scale models assembled with bolts, screws, pins and/or rivets.

According to an example, the number of blades 3 is comprised between 13 and 19 for a Francis turbine and between 7 and 11 for a pump turbine, depending on the hydraulic parameters. A single bloc structure according to the invention is particularly interesting for reduced scale models having a great number of blades, for example 19, in particular because it is more difficult - if not impossible - to access to internal parts of the runner through the channels formed between two neighboring blades 3.

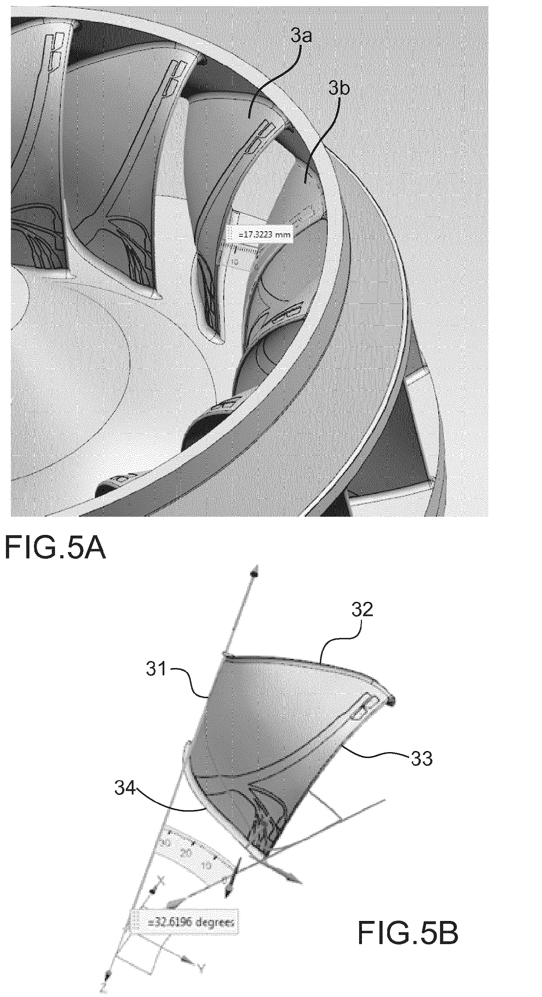

Depending on the number of blades 3, the distance (or opening) d (see figure 2) between neighboring blades can be less than 17 mm, or even less than 14 mm or than 10 mm or than 7 mm, for example larger than 3 mm or 5 mm . d is defined as the smallest distance d between two neighboring blades. An example of a measurement of d is illustrated on figure 5A, where d is between the root of two neighboring blades 3a, 3b. Reduced scale models with a smaller opening, for example less than 14 mm are particularly interesting for Francis turbines.

A reduced scale runner according to the invention can have an overlap factor higher than 600° or even higher than 720° of 860° or 1000°. Reduced scale models with a higher overlap factor, for example more than 600° or 720° are particularly interesting for pump turbine models.

The overlap factor is not scale dependent.

For each blade, the overlap is the maximal angle between two points of the blade projection in a plane perpendicular to the rotation axis of the runner. Figure 5B shows an example of a blade 3 having an overlap of 32.6196°, references 31 and 33 respectively designating the leading and trailing edges of the blade, comprised between a side 32 turned to the crown and a side 34 turned to the band.

The overlap factor of the whole runner is the sum of the overlap of all the individual blades of the runner.

In case of splitter blades (comprising pairs of long and small blades arranged periodically), the sum of the overlap of the small blade and of the overlap of the long blade is first calculated; this sum is then multiplied by the number of pairs of long and small blades.

Different processes will now be explained to manufacture a reduced scale runner according to the invention.

A first process which can be implemented for manufacturing a reduced scale runner according to the invention is an investment casting process, also known as "lost wax casting" , with help of a sacrificial pattern made of wax.

The scale model can be casted with a thin oversize, and then polished to reach an acceptable roughness, for example with a method like MMP (micro machining process) and/or it can eventually be locally machined.

Investment casting enables to manufacture a reduced scale model in full homothetic geometry with an industrial turbine, including the corner radii, the thickness of blades, the labyrinth, the crown, the band and the flange to couple the runner to the main shaft. The investment casting allows also having most of material properties in similitude with the industrial runner, for example isotropic behavior of material, continuous assembly between blades, crown and band hub etc.

Finally, the casted reduced scale model can be instrumented with sensors, for example one or more stress gage and/or pressure sensor and/or displacement sensor. One or more groove(s) or via(s) or duct(s) can be made in the model (see for example figure 2) to introduce therein electrical wires for connection to strain gauges and pressure sensors which can be glued against the surface of the model. Alternatively a casted reduced scale model not instrumented with sensors is adapted to performing hydraulic tests.

A preferred material for implementing this process is aluminum, because of its low melting temperature. However, it is recommended to anodize the final product, obtained after investment casting. Passages or vias or ducts for introducing electrical wires therein are preferably made in the reduced scale model after investment casting, and possibly after polishing, but before anodization, so that their walls are also anodized.

Another material for implementing this process is titanium which has a high tensile strength. Furthermore, it does not need to be anodized.

A second process which can be implemented for manufacturing a reduced scale runner according to the invention is a strong assembly process.

The parts are first manufactured and then strongly assembled by different ways, for example by brazing or welding; alternatively, the different parts are glued together.

Brazing and/or gluing are generally not considered for the manufacturing of runners intended to produce electrical power. Indeed for such runners, the mechanical strength must meet specific requirements. In other words, brazing and gluing are not strong enough to make such runners resisting to mechanical forces to which it may be is exposed.

Several of these different methods can be combined for making a same reduce scaled model runner. The advantages of all these methods is that the surface of the model offers continuity between the different parts assembled together.

Concerning welding, different welding techniques can be implemented, for example manual metal arc welding or autogenous welding or electron beam welding or friction stir welding or narrow gap welding or TIG (Tungsten Inert Gas) welding. They all warrant an exact mechanical continuity .

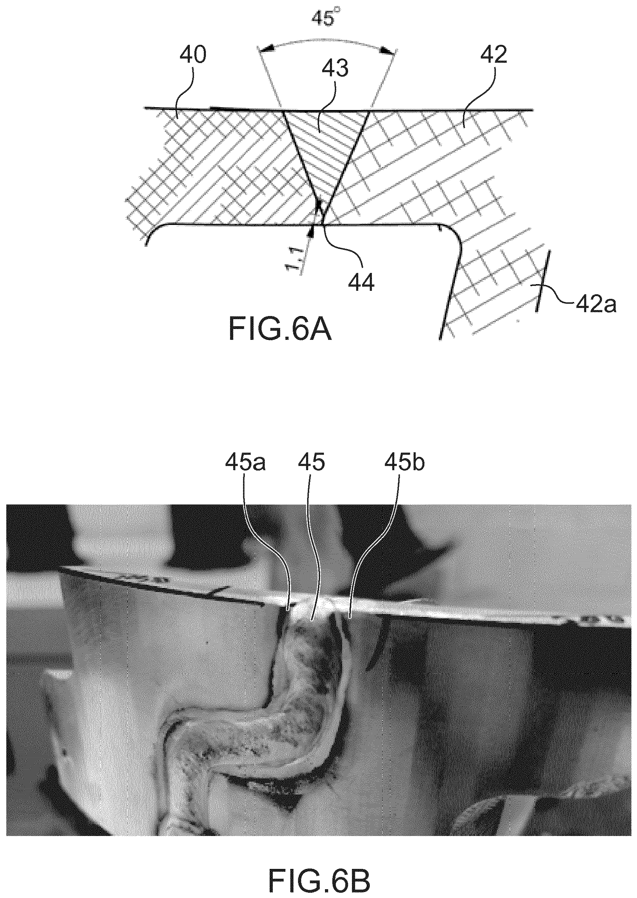

Preferably, as illustrated on figure 6A:
- two parts 40, 42 to weld are first machined in order to have the required roughness and a geometric tolerance according to the IEC 60193 and 62097 standards;
- and/or a throat 43 prepared for welding metal includes a root face (or a lower joint) 44 in order to avoid excess material at the root of the final seam.

Parts 40 and 42 can for example be two parts of the crown or of the band. Reference 42a designates a portion of a blade.

A plurality of welding paths can of course be made in order to obtain the required assembly.

Figure 6B shows a first welding path 45 of an assembly according to the invention. In this case, the band of a Francis scaled runner is welded. A plurality of welding paths are then performed in order to obtain the required assembly. For example two further welding paths can be made on the sides 45a, 45b of the first welding path 45.

The method of assembling the reduced scale model according to the present invention can comprise the steps of:
forming a reduced scale model segment comprising a band portion, a crown portion and a blade as an integral component, such that the band portion comprises a first band joining edge and a second joining edge, the crown portion comprises a first joining edge and a second joining edge, which edges are spaced apart from the blade of the segment; and
joining, for example by welding, a plurality of reduced scale model segments together at the joining edges to form the reduced scale model.

An advantage of this method for the reduced scale model according to the invention is that at least one sensor or gauge can be attached to the surface of one or more of the parts to assemble, before welding. This allows positioning at least one sensor or gauge at locations which could be difficult or impossible to reach after the model is assembled.

Brazing can notably be implemented between parts which can be positioned horizontally because of the melted metal employed for assembling the parts together. For implementing brazing it is recommended to first calculate the exact quantity of material to add, so that unnecessary material does not flow over the surface of the model, in particular along those parts along which a liquid will flow during tests performed with the model.

Preferably the clearance between the two parts to braze is between 0.1 mm and 1 mm. If it is too large (for example larger than 1 mm), there is a risk to create gaps in the final joint, which means that portions of the two parts are not well brazed. If clearance is too thin (for example thinner than 0.1 mm), there is a risk of excess brazing material flowing over the surface of the assembled parts, thus creating beads, requiring a further machining or grinding step.

The brazing material is a strip of material, for example tin or copper or silver or zinc or alloy of this material, with a thickness of 0.8 mm - 1 mm. If it is aluminum an anodizing step is performed after brazing.

The final brazing joint 10 (figure 3) preferably has a thickness less than 0.5 mm, more preferably less than or equal to about 0.1 mm (which results from finite elements calculations and which is a good compromise between minimizing errors on mechanical tests and a realistic precision of assembly of the two parts).Preferably two parts 13, 15 to be brazed are prepared so that they have similar slenderness ratio. For example the slenderness ratio of part 13 of figure 3 (part 13 is on the side of the band) is approximately the same as the part 15 (which is on the side of the crown), thus avoiding a situation where one of the parts is too slender compared to the other one (which makes brazing difficult). Figure 3 further shows a joint 10 resulting from a brazing process between the two parts 13, 15.

Gluing is easier to implement than brazing, but the assembly obtained by gluing is more fragile than by brazing. A glue material for manufacturing reduced scale models is preferably resistant over time to humidity and to mechanical constraints; preferably it is a bi-component adhesive or glue material, for example an epoxy adhesive or glue.

As an example, the glue can comprise one of the commercial gule chosen among: Loctite^{®} EA9480 (from Henkel), Crestabond^{®} M1-90 HV (from Scott Bader), Adekit^{®} A155 (from Axson), Adekit^{®} H9952 (from Axson), Duopox^{®} AD840 (from Delo), Körapox^{®} 565 (from Kommerling), Körapur^{®} 840 (from Kommerling), SikaPower^{®} 4720 (from Sika), Araldite^{®} 2014-1 (from Huntsman), Scotch Weld^{®} DP 490 (from 3M)

Gluing is preferably performed under controlled atmosphere, most preferably humidity controlled and a in temperature range of 5°- 40°C.

The final gluing joint 12 (figure 4) preferably has a thickness less than 0.5 mm, more preferably less than or equal to about 0.1 mm (which results from finite elements calculations and which is a good compromise between minimizing errors on mechanical tests and a realistic precision of assembly of the two parts).

An advantage of this method for the reduced scale model according to the invention is that at least one sensor or gauge can be attached to the surface of one or more of the parts before they are glued together. This allows positioning at least one sensor or gauge at locations which could be difficult or impossible to reach after the model is assembled.

An example of a detailed brazing process for manufacturing reduced scale models according to the invention comprises the following steps:
- the individual reduced scale parts are first manufactured, for example the crown 1, the band 2 and the blades 3 (figure 1);
- the individual reduced scale parts are temporarily assembled and maintained together;
- the thus assembled parts are immersed in a bath of salts ;
- the assembled parts are then introduce into an oven to melt the brazing material;
- the brazed parts are then cooled and the surface of the reduced scale modeled is cleaned;
- a final anodizing step can be performed.

In any strong assembly process, passages like grooves 7, 7a or ducts 8 (figure 2), if any, are made before assembly of the different parts together.

A third process which can be implemented for manufacturing a reduced scale runner according to the invention is an additive printing process.

Different additive techniques can be implemented, for example powder bed fusion, fused deposition modeling (FDM), metal additive manufacturing, CLAD additive manufacturing. Stereolithography is preferred because of the final isotropy.

A material for implementing this process is for example a plastic material or a metal., preferably a material allowing a deformation less than 0.5 mm of the trailing edge of the blades loaded during the test (this can be evaluated with help of a finite elements simulation).

The roughness of the final model is preferably less than 8 µm.

Passages grooves 7, 7a or ducts 8 (figure 2) can be made during the additive printing process.

A fourth process which can be implemented for manufacturing a reduced scale runner according to the invention is single bloc manufacturing.

According to this fourth process a small scale runner is machined from a single piece of a material, for example selected from among aluminum, PVC, stainless steel, bronze, etc.

The advantage of this process is that there is no need to assemble parts together and to add metal or glue between different parts. It is time consuming because it requires machining a material to make all parts of the runner including the blades and the ducts or channels for the wires.

According to another aspect, not covered by the claims, a reduced-scale model can comprise at least a band, a crown and blades between said band and said crown, wherein :
- a distance or an opening (C1) separating two neighbouring blades is between 5 mm and 14 mm (or 10 mm or 7 mm) or is less than 14 mm or 10 mm or 7 mm;
- and/or a recovery factor (C2) is higher than 720° or 860° or 1000°.

According to another aspect, not covered by the claims, a process for manufacturing a reduced-scale model turbine, said reduced-scale model comprising at least a band, a crown and blades between said band and said crown, comprises:
- a distance or an opening (C1) separating two neighbouring blades is between 5 mm and 14 mm (or 10 mm or 7 mm) or is less than 14 mm or 10 mm or 7 mm;
- and/or a recovery factor (C2) is higher than 720° or 860° or 1000°.

## Claims

1. A reduced-scale model of a hydraulic turbine runner, said reduced scale model being implemented only for hydraulic and/or mechanical tests and comprising a crown (1), a band (2) and blades (3) between said band and said crown, said model having a rotation axis (XX'), wherein the model is a single mechanical bloc assembly of said band, said crown and said blades_, and comprises one or more groove(s) and/or duct and/or via and/or channel and/or passage at or in the surface of said reduced-scale model or in said reduced-scale model in which one or more electrical wire(s) are positioned.

2. A reduced-scale model according to claim 1, wherein the turbine is a pump-turbine.

3. A reduced-scale model according to claim 1 or 2, wherein:
- a distance, or opening, (d) separating two neighbouring blades is between 5 mm and 14 mm or 10 mm or 7 mm or less than 14 mm or less than 10 mm or less than 7 mm;
- and/or an overlap, or recovery, factor of the model is higher than 720° or higher than 860° or higher than 1000°, said overlap factor being the sum of the overlap of all individual blades, the overlap of each blade being the maximal angle between two points of the blade projection in a plane perpendicular to said rotation axis (XX').

4. A reduced-scale model according to any of claims 1 to 3, comprising at least one sensor, for example at least one pressure sensor (14) and/or at least one strain gauge (16) and/or at least one accelerometer and/or at least one displacement sensor.

5. A reduced-scale model according to any of claims 1 to 4, further comprising assembly lines (10, 12) along which two different parts of the model were brazed or glued or welded together.

6. A reduced-scale model according to any of claims 1 to 5, comprising brazing or gluing joints or lines (10, 12) having a thickness less than 0.5 mm or 0.1 mm.

7. A reduced-scale model according to any of claims 1 to 6, wherein:
- the turbine is a Francis turbine and the number of blades is comprised between 13 and 19;
- or the turbine is a pump-turbine and the number of blades is comprised between 7 and 11.

8. A reduced-scale model according to any of claims 1 to 7, wherein the reduced-scale model is made of aluminum or titanium or PVC or stainless steel or bronze.

9. A process for manufacturing a reduced-scale model of a hydraulic turbine runner, said reduced scale model being implemented only for hydraulic and/or mechanical tests and comprising at least a crown (1), a band (2) and blades (3) between said band and said crown, said process comprising manufacturing a single mechanical bloc assembly of said band, said crown (1), and said blades (3), said process further comprising a step of forming at least one groove (7, 7a) and/or via (8) and/or duct and/or channel and/or passage at or in the surface of the model or in the model, and introducing at least one electrical wire in said at least one groove and/or via and/or duct and/or channel and/or passage.

10. A process according to claim 9, further comprising at least one of a polishing step and an anodization step.

11. A process according to any of claims 9 or 10, said process comprising an investment casting process, a strong assembly process, an additive printing and single bloc machining process.

12. A process according to any of claims 9 to 11, said process comprising:
- an investment casting process, the material of the reduced-scale model being aluminum or titanium;
- or a strong assembly process, different parts of the model being assembled by brazing or welding or with help of glue;
- or an additive printing process, the material of the reduced-scale model being plastic or metal;
- or a monobloc machining process, the material of the reduced-scale model being aluminum or PVC or stainless steel or bronze.

13. A process according to any of claims 9 to 12, said process comprising welding or gluing different parts of the model, at least one sensor or gauge being positioned against a surface of at least a first part of said parts before welding or gluing said first part with a second part of said parts.

14. A process according to any of claims 9 to 13, further comprising positioning at least one sensor or gauge against a surface of said model, for example at least one pressure sensor and/or strain gauge and/or accelerometer and/or displacement sensor.

15. A process according to any of claims 9 to 14, wherein:
- a distance or an opening (C1) separating two neighbouring blades is between 5 mm and 14 mm or 10 mm or 7 mm or is less than 14 mm or 10 mm or 7 mm;
- and/or an overlap or a recovery factor (C2) is higher than 720° or 860° or 1000°.

## Patentansprüche

1. Verkleinertes Modell eines hydraulischen Turbinenlaufrads, wobei das verkleinerte Modell nur für hydraulische und/oder mechanische Prüfungen implementiert wird und eine Krone (1), ein Band (2) und Schaufeln (3) zwischen dem Band und der Krone umfasst, wobei das Modell eine Rotationsachse (XX') aufweist, wobei das Modell eine einzelne mechanische Blockbaugruppe aus dem Band, der Krone und den Schaufeln ist und eine oder mehrere Nuten und/oder Leitungen und/oder Durchgänge und/oder Kanäle und/oder Durchlässe an oder in der Oberfläche des verkleinerten Modells oder im verkleinerten Modell umfasst, in dem/denen ein oder mehrere elektrische Drähte positioniert ist/sind.

2. Verkleinertes Modell nach Anspruch 1, wobei die Turbine eine Pumpenturbine ist.

3. Verkleinertes Modell nach Anspruch 1 oder 2, wobei:
- ein Abstand oder eine Öffnung (d) zwischen zwei benachbarten Schaufeln zwischen 5 mm und 14 mm oder 10 mm oder 7 mm oder weniger als 14 mm oder weniger als 10 mm oder weniger als 7 mm beträgt;
- und/oder eine Überlappung oder ein Rückgewinnungsfaktor des Modells größer als 720° oder größer als 860° oder größer als 1000° ist, wobei der Überlappungsfaktor die Summe der Überlappung aller einzelnen Schaufeln ist, wobei die Überlappung jeder Schaufel der maximale Winkel zwischen zwei Punkten der Schaufelprojektion in einer Ebene senkrecht zur Rotationsachse (XX') ist.

4. Verkleinertes Modell nach einem der Ansprüche 1 bis 3, umfassend mindestens einen Sensor, beispielsweise mindestens einen Drucksensor (14) und/oder mindestens einen Dehnungsmessstreifen (16) und/oder mindestens einen Beschleunigungsmesser und/oder mindestens einen Wegsensor.

5. Verkleinertes Modell nach einem der Ansprüche 1 bis 4, ferner umfassend Montagelinien (10, 12), an denen zwei verschiedene Teile des Modells miteinander verlötet oder verklebt oder verschweißt wurden.

6. Verkleinertes Modell nach einem der Ansprüche 1 bis 5, umfassend Löt- oder Klebeverbindungen oder -linien (10, 12) mit einer Dicke von weniger als 0,5 mm oder 0,1 mm.

7. Verkleinertes Modell nach einem der Ansprüche 1 bis 6, wobei:
- die Turbine eine Francis-Turbine ist und die Anzahl der Schaufeln zwischen 13 und 19 liegt;
- oder die Turbine eine Pumpenturbine ist und die Anzahl der Schaufeln zwischen 7 und 11 liegt.

8. Verkleinertes Modell nach einem der Ansprüche 1 bis 7, wobei das verkleinerte Modell aus Aluminium oder Titan oder PVC oder Edelstahl oder Bronze besteht.

9. Verfahren zum Herstellen eines verkleinerten Modells eines hydraulischen Turbinenlaufrads, wobei das verkleinerte Modell nur für hydraulische und/oder mechanische Prüfungen implementiert wird und mindestens eine Krone (1), ein Band (2) und Schaufeln (3) zwischen dem Band und der Krone umfasst, wobei das Verfahren das Herstellen einer einzelnen mechanischen Blockbaugruppe aus dem Band, der Krone (1) und den Schaufeln (3) umfasst, wobei das Verfahren ferner einen Schritt des Bildens mindestens einer Nut (7, 7a) und/oder eines Durchgangs (8) und/oder einer Leitung und/oder eines Kanals und/oder eines Durchlasses an oder in der Oberfläche des Modells oder im Modell und des Einführens mindestens eines elektrischen Drahts in die mindestens eine Nut und/oder den Durchgang und/oder die Leitung und/oder den Kanal und/oder den Durchlass umfasst.

10. Verfahren nach Anspruch 9, ferner umfassend mindestens einen von einem Polierschritt und einem Eloxierschritt.

11. Verfahren nach einem der Ansprüche 9 oder 10, wobei das Verfahren ein Feingussverfahren, ein starkes Montageverfahren, ein additives Druckverfahren und ein Einzelblockbearbeitungsverfahren umfasst.

12. Verfahren nach einem der Ansprüche 9 bis 11, wobei das Verfahren Folgendes umfasst:
- ein Feingussverfahren, wobei das Material des verkleinerten Modells Aluminium oder Titan ist;
- oder ein starkes Montageverfahren, bei dem die verschiedenen Teile des Modells durch Löten oder Schweißen oder mit Hilfe von Klebstoff zusammengefügt werden;
- oder ein additives Druckverfahren, wobei das Material des verkleinerten Modells Kunststoff oder Metall ist;
- oder ein Monoblock-Bearbeitungsverfahren, wobei das Material des verkleinerten Modells Aluminium oder PVC oder Edelstahl oder Bronze ist.

13. Verfahren nach einem der Ansprüche 9 bis 12, wobei das Verfahren das Verschweißen oder Verkleben verschiedener Teile des Modells umfasst, wobei mindestens ein Sensor oder ein Messgerät an einer Oberfläche von mindestens einem ersten Teil der Teile positioniert wird, bevor das erste Teil mit einem zweiten Teil der Teile verschweißt oder verklebt wird.

14. Verfahren nach einem der Ansprüche 9 bis 13, ferner umfassend das Positionieren mindestens eines Sensors oder eines Messgeräts, beispielsweise mindestens eines Drucksensors und/oder eines Dehnungsmessstreifens und/oder eines Beschleunigungsmessers und/oder eines Wegsensors, an einer Oberfläche des Modells.

15. Verfahren nach einem der Ansprüche 9 bis 14, wobei:
- ein Abstand oder eine Öffnung (C1) zwischen zwei benachbarten Schaufeln zwischen 5 mm und 14 mm oder 10 mm oder 7 mm oder weniger als 14 mm oder 10 mm oder 7 mm beträgt;
- und/oder eine Überlappung oder ein Rückgewinnungsfaktor (C2) größer als 720° oder 860° oder 1000° ist.

## Revendications

1. Modèle réduit d'une roue de turbine hydraulique, ledit modèle réduit étant mis en œuvre uniquement pour des essais hydrauliques et/ou mécaniques et comportant une couronne (1), une bande (2) et des aubes (3) entre ladite bande et ladite couronne, ledit modèle ayant un axe de rotation (XX'), dans lequel le modèle est un ensemble monobloc mécanique de ladite bande, de ladite couronne et desdites aubes, et comporte une ou plusieurs rainures et/ou un ou plusieurs conduits et/ou un ou plusieurs trous d'interconnexion et/ou un ou plusieurs canaux et/ou un ou plusieurs passages au niveau ou dans la surface dudit modèle réduit ou dans ledit modèle réduit dans lesquels un ou plusieurs fils électriques sont positionnés.

2. Modèle réduit selon la revendication 1, dans lequel la turbine est une pompe-turbine.

3. Modèle réduit selon la revendication 1 ou 2, dans lequel :
- une distance, ou ouverture, (d) séparant deux aubes voisines est comprise entre 5 mm et 14 mm ou 10 mm ou 7 mm ou inférieure à 14 mm ou inférieure à 10 mm ou inférieure à 7 mm ;
- et/ou un facteur de chevauchement, ou de recouvrement, du modèle est supérieur à 720°, supérieur à 860° ou supérieur à 1 000°, ledit facteur de chevauchement étant la somme du chevauchement de toutes les aubes individuelles, le chevauchement de chaque aube étant l'angle maximal entre deux points de la projection d'aube dans un plan perpendiculaire audit axe de rotation (XX').

4. Modèle réduit selon l'une quelconque des revendications 1 à 3, comportant au moins un capteur, par exemple au moins un capteur de pression (14) et/ou au moins un extensomètre (16) et/ou au moins un accéléromètre et/ou au moins un capteur de déplacement.

5. Modèle réduit selon l'une quelconque des revendications 1 à 4, comportant en outre des lignes d'assemblage (10, 12) le long desquelles deux parties différentes du modèle ont été brasées, collées ou soudées ensemble.

6. Modèle réduit selon l'une quelconque des revendications 1 à 5, comportant des joints ou lignes de brasage ou de collage (10, 12) ayant une épaisseur inférieure à 0,5 mm ou 0,1 mm.

7. Modèle réduit selon l'une quelconque des revendications 1 à 6, dans lequel :
- la turbine est une turbine Francis et le nombre d'aubes est compris entre 13 et 19 ;
- ou la turbine est une pompe-turbine et le nombre d'aubes est compris entre 7 et 11.

8. Modèle réduit selon l'une quelconque des revendications 1 à 7, dans lequel le modèle réduit est en aluminium, en titane, en PVC, en acier inoxydable ou en bronze.

9. Processus de fabrication d'un modèle réduit d'une roue de turbine hydraulique, ledit modèle réduit étant mis en œuvre uniquement pour des essais hydrauliques et/ou mécaniques et comportant au moins une couronne (1), une bande (2) et des aubes (3) entre ladite bande et ladite couronne, ledit processus comportant la fabrication d'un ensemble monobloc mécanique de ladite bande, de ladite couronne (1) et desdites aubes (3), ledit processus comportant en outre une étape consistant à former au moins une rainure (7, 7a) et/ou au moins un trou d'interconnexion (8) et/ou au moins un conduit et/ou au moins un canal et/ou au moins un passage au niveau ou dans la surface du modèle ou dans le modèle, et à introduire au moins un fil électrique dans ladite au moins une rainure et/ou ledit au moins un trou d'interconnexion et/ou ledit au moins un conduit et/ou ledit au moins un canal et/ou ledit au moins un passage.

10. Processus selon la revendication 9, comportant en outre au moins une parmi une étape de polissage et une étape d'anodisation.

11. Processus selon l'une quelconque des revendications 9 ou 10, ledit processus comportant un processus de coulée de précision, un processus d'assemblage solide, un processus d'impression additive et un processus d'usinage monobloc.

12. Processus selon l'une quelconque des revendications 9 à 11, ledit processus comportant :
- un processus de coulée de précision, le matériau du modèle réduit étant l'aluminium ou le titane ;
- ou un processus d'assemblage solide, différentes parties du modèle étant assemblées par brasage ou soudage, ou à l'aide de colle ;
- ou un processus d'impression additive, le matériau du modèle réduit étant du plastique ou du métal ;
- ou un processus d'usinage monobloc, le matériau du modèle réduit étant de l'aluminium, du PVC, de l'acier inoxydable ou du bronze.

13. Processus selon l'une quelconque des revendications 9 à 12, ledit processus comportant le soudage ou le collage de différentes parties du modèle, au moins un capteur ou une jauge étant positionné(e) contre une surface d'au moins une première partie desdites parties avant le soudage ou le collage de ladite première partie à une deuxième partie desdites parties.

14. Processus selon l'une quelconque des revendications 9 à 13, comportant en outre le positionnement d'au moins un capteur ou une jauge contre une surface dudit modèle, par exemple au moins un capteur de pression et/ou un extensomètre et/ou un accéléromètre et/ou un capteur de déplacement.

15. Processus selon l'une quelconque des revendications 9 à 14, dans lequel :
- une distance ou une ouverture (C1) séparant deux aubes voisines est comprise entre 5 mm et 14 mm ou 10 mm ou 7 mm ou est inférieure à 14 mm ou 10 mm ou 7 mm ;
- et/ou un facteur de chevauchement ou de recouvrement (C2) est supérieur à 720°, 860° ou 1 000°.
